# EUROPEAN PATENT SPECIFICATION

(11) **EP 1 262 641 B1**
(45) Date of publication and mention of the grant of the patent: **14.07.2004**
(21) Application number: 02253100.8
(22) Date of filing: 01.05.2002
(51) Int. Cl.: F01N 3/022, F01N 3/023, F01N 3/035

(54) **Carbon particle reducing apparatus**
Vorrichtung zur Kohlenstoffpartikelreduktion
Dispositif de réduction des particules carbonées

(30) Priority: 15.05.2001 JP 2001144481
(43) Date of publication of application: 04.12.2002
(73) Proprietor: MITSUI & CO., LTD., Chiyoda-ku Tokyo-to 100-0004 (JP)
(72) Inventor: Toyoda, Tetsuro,c/o Mitsui & Co., Ltd., Tokyo 100-0004 (JP); Yano, Motohiro,c/o Mitsui & Co., Ltd., Tokyo 100-0004 (JP); Shiro, Yuji,c/o Mitsui & Co., Ltd., Tokyo 100-0004 (JP); Sugawara, Koichi,c/o Mitsui & Co., Ltd., Tokyo 100-0004 (JP)
(74) Representative: Haley, Stephen

(56) References cited:
- EP-A- 1 055 805
- WO-A-00/34632
- WO-A-99/44725
- US-A- 4 535 588
- PATENT ABSTRACTS OF JAPAN vol. 2000, no. 09, 13 October 2000 (2000-10-13) & JP 2000 154712 A (DENSO CORP), 6 June 2000 (2000-06-06)

## Description

The present invention relates to an apparatus for reducing carbon particles. More particularly, the present invention relates to a carbon particle reducing apparatus which can capture and accumulate carbon particles such as soot and smoke contained in the exhaust gas of, for example, a Diesel engine, then allow the carbon particles to oxidize and burn, thereby reducing and/or eliminating them.

### Description of the Prior Art

Contained in the exhaust gas of a Diesel engine are fine particles of carbon, i.e. carbon particles PM (Particle Matter), which are the soot and smoke generated by incomplete combustion of a fuel.

If such carbon particles PM are directly discharged to the open air, these become a pollutant and are harmful. It is therefore an important theme to reduce or eliminate the carbon particles.

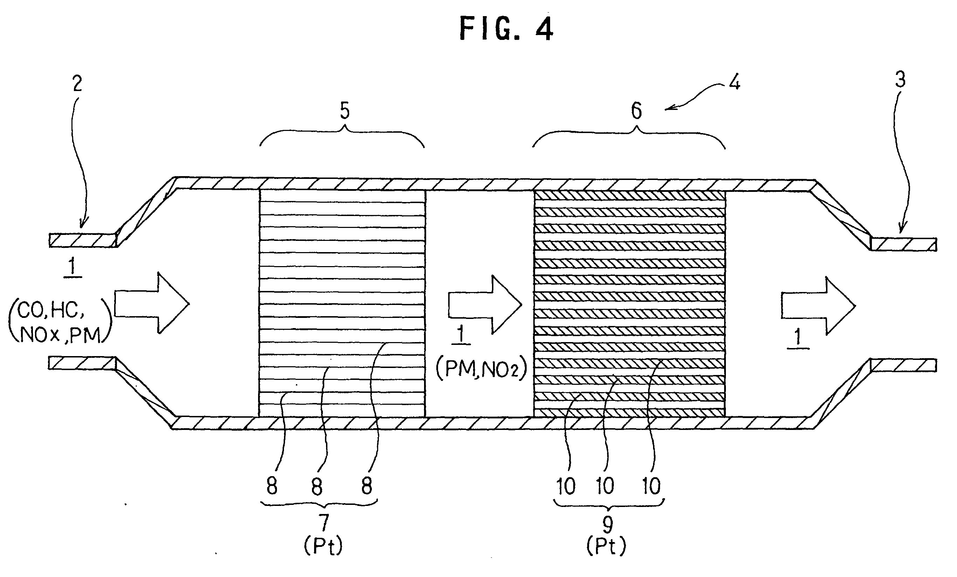

Fig. 4 is an explanatory cross-sectional view showing an eliminating apparatus for the carbon particles PM according to the prior art of this kind. An exhaust pipe 2, 3 for exhaust gas 1 emitted from a Diesel engine is provided with a catalytic converter 4 therebetween. The catalytic converter 4 is provided with a purifier 5 for purifying CO, HC, etc. and an eliminating apparatus 6 for the carbon particles PM in that order.

The purifier 5 has a honeycomb core 7 provided with cell walls 8 which are caused to adhere and are coated with an oxidation catalyst such as Pt. The purifier 5 is caused not only to oxidize, burn, and then eliminate CO, HC, etc., but also to allow NO in the exhaust gas 1 to oxidize to NO₂.

The eliminating apparatus 6 for the carbon particles PM has a high-density porous filter 9 made of ceramics provided with pore walls 10 which are caused to adhere and are coated with an oxidation catalyst such as Pt. The eliminating apparatus 6 is caused not only to capture and accumulate the carbon particles PM in the exhaust gas 1, but also to oxidize, burn, and then eliminate the carbon particles PM.

### ((First problem))

The following problems have been pointed out in the prior art. First, The eliminating apparatus 6 for the carbon particles PM of the catalytic converter 4 is easily broken in use.

Namely, the high-density porous filter 9 made of ceramics is employed in the conventional eliminating apparatus 6, wherein a large amount of carbon particles PM, after being captured and accumulated by each pore wall 10 of the filter 9, has been oxidized, burned, and then eliminated all together. In this case, a capture ratio and/or an elimination ratio of the carbon particles PM amounted to 95% or more. Since the large amount of carbon particles PM captured and accumulated in such a manner are intensively oxidized and burnt all together, a sharp rise in temperature occurs, and the maximum temperature almost reaches about 1,200 K.

Thus, in the conventional eliminating apparatus 6 for the carbon particles PM, there is a problem that the filter 9 will be broken under such a high temperature in use.

### ((Second problem))

The life of the conventional eliminating apparatus 6 for carbon particles PM is short.

Namely, it was expected that this eliminating apparatus 6 would be regenerated in order to be continuously used thereafter. Namely, once the filter 9 oxidizes, burns, and then eliminates the captured and accumulated carbon particles PM, the filter 9 is regenerated to repeat a cycle of capture of new carbon particles PM, accumulation, oxidization, burning, and then elimination. Thus, the filter 9 was expected to repeat a series of cycles of regeneration, capture, accumulation, oxidization, burning, and elimination in that order.

But, as mentioned above, the heat breakage of the filter 9 of this eliminating apparatus 6 under high temperature readily occurs and the filter 9 has been destroyed in about a week. Accordingly, the filter 9 has a drawback because of its extremely short life, and the cost burden is heavy.

### ((Third problem))

Thirdly, it is pointed out that sulfur (S) contained in the exhaust gas 1 may affect the capture, accumulation, oxidization, burning, and elimination of the carbon particles PM.

Namely, the sulfur (S) in the petroleum remains in the exhaust gas 1. About 500 ppm of Sulfur (S) are now contained in the exhaust gas 1, but it will be reduced to about 50 ppm in the future. It has therefore been pointed out that sulfur (S) forms sulfate SO₄² in the eliminating apparatus 6 for carbon particles PM, adheres to the carbon particles PM, and causes clogging, etc.

As a result, it has been difficult to capture, accumulate, oxidize, burn and then eliminate the carbon particles PM in the filter 9. In particular, the problems caused by the sulfur (S) are obvious in the exhaust gas 1 containing a high concentration of sulfur (S) of about 500 ppm or the exhaust gas 1 containing a large amount of carbon particles PM.

In the catalytic converter 4, the purifier 5 situated on the upstream side thereof causes nitrogen oxide NO to oxidize to nitrogen dioxide NO₂ which is then supplied to the eliminating apparatus 6 for the carbon particles PM on the downstream side.

The nitrogen dioxide NO₂ has a function of accelerating oxidization and burning, and elimination of the carbon particles PM in the eliminating apparatus 6 and thus is expected to considerably solve the problems caused by sulfur (S) described above.

Such a function of nitrogen dioxide NO₂ is exhibited at a temperature level of about 600 K. However, as described above, in the conventional eliminating apparatus, a sharp temperature rise up to about 1,200 K is observed. Accordingly, it has been almost impossible to cause the nitrogen dioxide NO₂ to exhibit such a function.

WO-A-0034632 discloses a system for after treatment of exhaust gases which comprises two catalysts.

WO-A-9944725 discloses a system for removing particulates from diesel which comprises a catalyst and a particulate trap.

EP-A-1055805 discloses a system for removing soil from exhaust gases, which has two consecutive process stages.

In order to solve some of the problems present in the prior art, according to the present invention there is provided an apparatus for removing carbon particles from diesel engine exhaust gases, the apparatus comprising:
a plurality of metal filters having a wire mesh structure, the filters arranged to capture, in use, carbon particles, wherein the filters regenerate, in use, in order to be continuously used thereafter, wherein at least some of the filters have the same outer diameter;
a cylindrical casing arranged, in use, to house the filters; characterised by:
   a space provided between the casing and the filters;
   a holder positioned in the space between the casing and filters, arranged, in use, to hold the filters within the casing;
   a plate which closes, in use, one end of a filter closest to the upstream side of the apparatus;
   an opening provided in a central section of at least some of the filters for communication, in use, between filters and communication with an exhaust pipe on the downstream side of apparatus; and
wherein at least some of the filters have different mesh densities.

Operations of the apparatus for reducing carbon particles according to the present invention will now be described.

An exhaust pipe for exhaust gas from a Diesel engine or the like is provided therein with an apparatus for reducing carbon particles employing one or more filters with a wire mesh structure. This reducing apparatus is caused to capture, accumulate, oxidize, burn, reduce and/or eliminate the carbon particles from within the exhaust gas.

A capture ratio and/or an elimination ratio of the carbon particles are set to about 5% ~ 80, e.g., about 60% ~ 80%. Setting and/or adjustment of this capture ratio and/or elimination ratio are realized, taking the content of the carbon particles in the exhaust gas into consideration, by a selective combination of (a) essential adoption of one or more filters with a wire mesh structure, (b) adhesion and coating of an oxidation catalyst such as platinum to the filters, (c) adoption of a plurality of filters having different mesh densities, (d) spaces in a lateral direction between the filters, (e) insertion of an auxiliary section for the oxidation catalyst such as platinum into the spaces, etc.

In the reducing apparatus for carbon particles, a small amount of the carbon particles is first captured and accumulated by the filters, and soon oxidized and burnt, under such a capture ratio and/or elimination ratio.

Thus, the filters are controlled in the temperature level of about 600 K (e.g., maximum temperature is about 900 K) and as a result, heat breakage is prevented. Further, since the filters are provided with a wire mesh structure, they are flexible and easily cleaned. Breakage can also be prevented from this aspect.

Secondly, the filters repeat a cycle of capture and accumulation of the carbon particles → oxidization and burning → reduction and/or elimination → regeneration in order to be continuously used.

Thirdly, if one or more filters are used in this reducing apparatus, it is also possible to reduce such a harmful influence that sulfur contained in the exhaust gas forms a sulfate, adheres to the carbon particles to make oxidization and burning difficult, and causes clogging or the like.

What was first described above can be further ensured in combination with a purifier. The purifier has one or more honeycomb cores provided with cell walls to which an oxidation catalyst such as platinum is coated, and caused to adhere. The honeycomb cores cause nitrogen oxide to oxidize to nitrogen dioxide thereby to accelerate oxidization and burning of the carbon particles in the filters of the reducing apparatus provided on the downstream side.

What was secondly described above can be further ensured in combination with one or more supply sections for a fuel additive. The supply sections can be controlled by one or more backpressure sensors provided near the filters and supply a Diesel engine with cerium and an oxidation catalyst such as platinum as a fuel additive. In this manner, capture and accumulation, and oxidization and burning of the carbon particles in the filters are accelerated by the fuel additive in the exhaust gas of the Diesel engine.

Thirdly, one or more filters can also be provided within an outer cylindrical casing by providing a space between the filters and the casing, and the filters are further provided with an opening for communication at the center position thereof.

The above and other objects, features and advantages of the present invention will become more apparent from the following description when taken in conjunction with the accompanying drawings.
Fig. 1 is an explanatory cross-sectional view of a comparable reducing apparatus for carbon particles;
Fig. 2 is a front view explaining an entire exhaust system of a comparable reducing apparatus for carbon particles;
Fig. 3 is an explanatory cross-sectional view of a reducing apparatus for carbon particles according to one embodiment of the present invention; and
Fig. 4 is an explanatory cross-sectional view of a conventional eliminating apparatus for carbon particles.

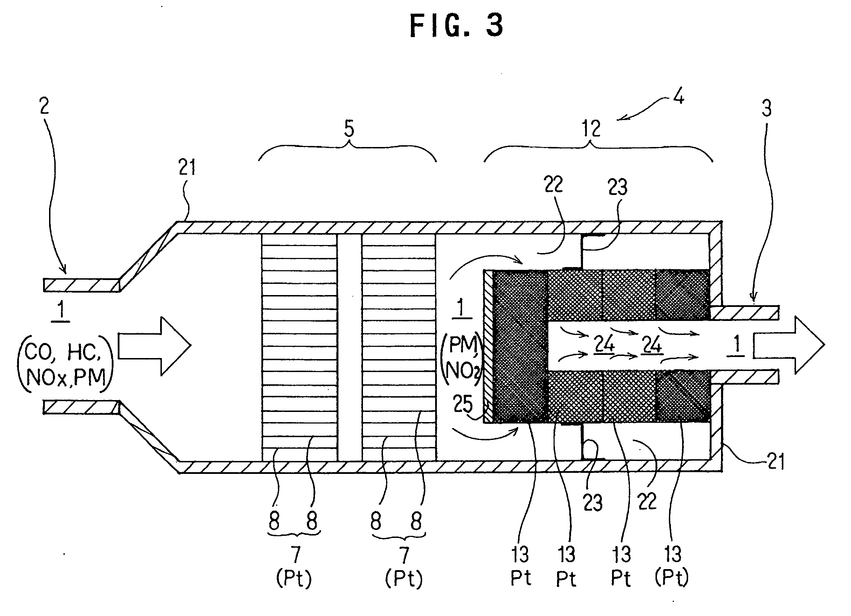

Preferred embodiments of the present invention will now be described with reference to the accompanying drawings. Fig. 3 is provided to explain one embodiment of the present invention.

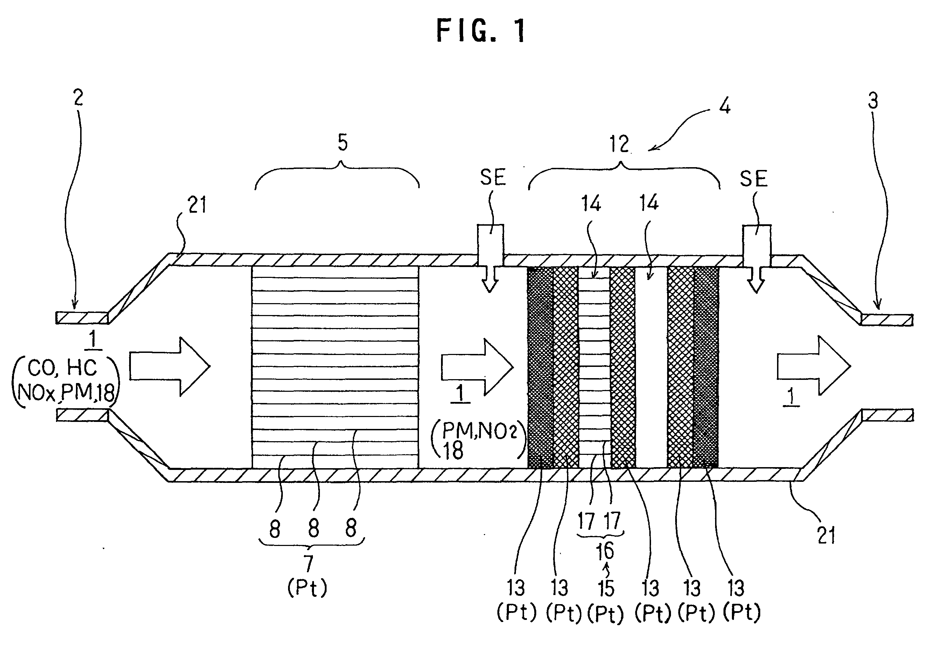

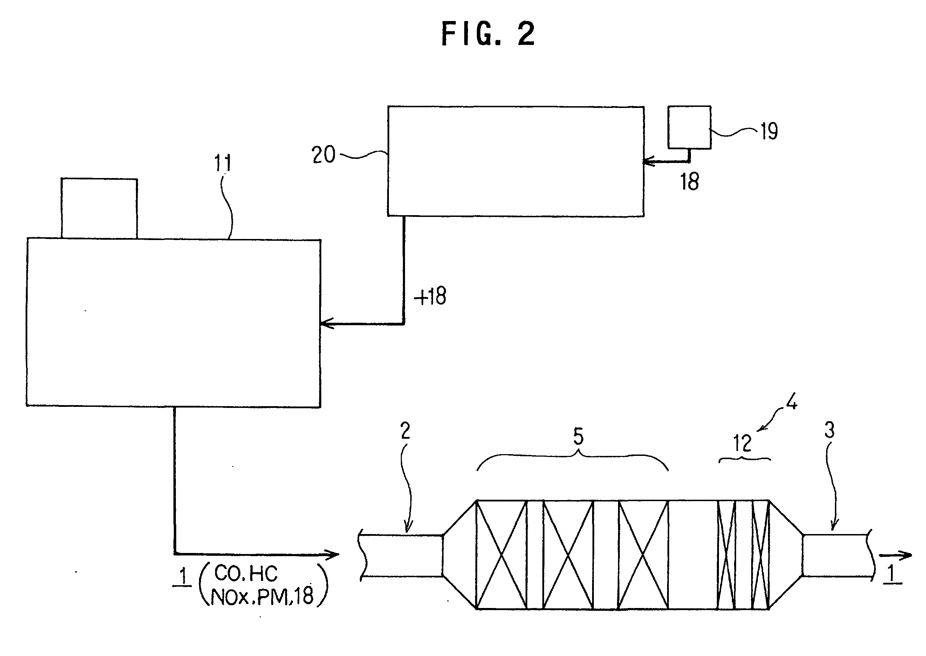

Fig. 1 is an explanatory cross-sectional view of a comparable reducing apparatus for carbon particles and Fig. 2 is a front view explaining an entire exhaust system. Fig. 3 is an explanatory cross-sectional view of one embodiment of the present invention.

A catalytic converter 4 is explained with reference to Fig. 2. An internal combustion engine, e.g., a Diesel engine 11 is widely used not only in automobiles, but also in power generation, marine vessels, locomotives, airplanes, various pieces of machinery or the like.

Exhaust gas 1 discharged from the internal combustion engine, e.g., the Diesel engine 11 contains carbon monoxide CO, hydrocarbon HC, nitrogen oxides NOx, carbon particles PM, etc.

If the exhaust gas 1 containing such a harmful pollutant is directly discharged to the open air, it is harmful to the human body and the environment. Accordingly, for the purpose of preventing environmental pollution, an exhaust pipe 2, 3 for the exhaust gas 1 used in the Diesel engine 11 etc. is provided with a catalytic converter 4 or the like in the middle thereof.

The catalytic converter 4 is generally formed in a cylindrical or square-pipe shape and inserted between the exhaust pipe 2 on the upstream side and the exhaust pipe 3 on the downstream side. The catalytic converter 4 is detachably provided with a purifier 5 for carbon monoxide CO and hydrocarbon HC, and a reducing apparatus 12 for carbon particles PM in that order within an outer cylindrical casing 21.

The purifier 5 has one or more honeycomb cores 7 provided with cell walls 8 to which an oxidation catalyst such as Pt is coated, and caused to adhere. The

purifier 5 is provided to cause CO, HC, etc. contained in the passing exhaust gas 1 to oxidize and burn, thereby reducing and/or eliminating them. In addition, the purifier 5 allows NO of NOx to oxidize to nitrogen dioxide NO₂.

The reducing apparatus 12 for carbon particles PM is caused to capture and accumulate, and then oxidize and burn the carbon particles PM contained in the passing exhaust gas 1, thereby reducing and/or eliminating the carbon particles PM. The catalytic converter 4 is constructed as described in the above.

### ((A reducing apparatus 12 for carbon particles PM))

A comparable reducing apparatus 12 for carbon particles PM is explained with reference to Fig. 1. The reducing apparatus 12 adopts one or more filters 13 having a wire mesh structure which are caused to capture and accumulate the carbon particles PM from within the exhaust gas 1 → oxidize and burn the carbon particles PM → reduce and/or eliminate the carbon particles PM. Thus, the reducing apparatus 12 is also regenerated and continuously used thereafter.

The comparable reducing apparatus 12 will now be described below in detail. First, the carbon particles PM are generated by incomplete combustion of fuel in a Diesel engine 11 (see Fig. 2) and consist of impure material of carbon fine particles, so-called soot and smoke which are cinders of the fuel. The filters 13 consist of a wire mesh structure in which extra fine metal wires are vertically and laterally meshed in a fine and dense net form. The filters 13 are typically formed from metal such as stainless steel, but may be formed by a fibrously woven aggregate or a punched aggregate.

The filters 13 of the reducing apparatus 12 can be formed in various ways as shown below:
(a) The wire mesh structure described above is adopted in common by one or more filters 13.
(b) It is considered to have such a structure whereby an oxidation catalyst such as Pt adheres to the filters 13 and the filters 13 are coated with the oxidation catalyst such as Pt.
   Namely, a structure is considered whereby one or more filters 13 with a wire mesh structure are provided to serve as a body for holding an oxidation catalyst, wherein the wires are caused to hold a metal and a metallic oxide such as Pt, V, Cu or Mn as the oxidation catalyst by means of impregnation, application, adhesion, coating or the like. On the contrary, it is also possible that the oxidation catalyst is arranged not to adhere to the filters 13 and the filters 13 are not coated with the oxidation catalyst.
(c) A structure is also considered whereby a plurality of filters 13 having different mesh density is used in the reducing apparatus 12. Specifically, the plurality of filters 13 with the wire mesh structure can be provided from the upstream side toward the down stream side, wherein the filters with different mesh density can also be combined as shown in the figures. The reason why the filters with different mesh density are used is to cope with the carbon particles PM with different sizes.
   In the case where the total mesh density is, for example, 40% in one reducing apparatus 12, the filters 13 with intermediate mesh density of about 10%, the filters 13 with sparse mesh density of about 5%, and the filters 13 with very heavy mesh density of about 25% can be use by combining them in order. It is of course possible that a plurality of filters 13 with the same mesh density can be combined in the reducing apparatus 12.
(d) In the case where the plurality of filters 13 is used in one reducing apparatus 12, spaces 14 can also be provided in a lateral direction between each filter 13.
   Although the spaces 14 can be provided between each filter 13, it is also possible to allow adjacent filters 13 to come into contact so that no space is provided between the filters 13. In Fig. 1, there are five (5) filters 13 in all and two (2) spaces 14 are formed in a lateral direction. There are also two (2) locations where the filters 13 are in contact with one another.
(e) In the case where one or more spaces 14 are provided in a lateral direction between each filter 13, it is possible to make the spaces 14 blank or to insert an auxiliary section 15 into one or more spaces 14. In Fig. 1, one auxiliary section 15 only is inserted in one space 14.

This auxiliary section 15 makes each cell wall 17 of a honeycomb core 16 made of metal such as stainless steel a body for supporting an oxidation catalyst. The oxidation catalyst such as Pt is supported by the cell wall 17 by way of adhesion and coating. Adhesion of and coating with the oxidation catalyst to the honeycomb core 16 is easier than the adhesion of and coating with the oxidation catalyst to the filter 13 with the wire mesh structure.

In the comparable reducing apparatus 12 for carbon particles PM, a capture ratio and/or an elimination ratio of the carbon particles PM are set to about 5% ~ 80%, typically about 60% ~ 80% by various combination of the filters 13 described in the above (a), (b), (c), (d) and (e).

In the case where a conventional Diesel engine 11 of which the percentage content and a discharge ratio of the carbon particles PM is high is used, the capture ratio and/or the elimination ratio are set to about 60% ~ 80%. On the contrary, in the case where the latest Diesel engine 11 of which the percentage content and/or the discharge ratio of the carbon particles PM is low is used, the capture ratio and/or the elimination ratio are set to about 5% ~ 30%.

As described above, the filters 13 provided in the reducing apparatus 12 can be constructed in various ways. Each of the capture ratio, elimination ratio, and filtration fraction is set to a predetermined value (%) by selectively selecting the structure of these (a), (b), (c), (d), and (e) in response to the content of carbon particles PM in the exhaust gas 1.

For example, in the case where the oxidation catalyst such as Pt does not adhere to, and is not coated [see (b)] on a plurality of filters 13 with a wire mesh structure [see (a)], when the content of carbon particles PM in the exhaust gas 1 is large, the auxiliary section 15 is inserted between one or more spaces 14 [see (d)] provided in a lateral direction between the plurality of filters [see (c)] while when the content of the carbon particles PM is small, each space 14 is left blank as a vacant space [see (e)] regarding.

The combination of the above (a), (b), (c), (d), and (e) is made in various ways. For example, with reference to the plurality of filters 13, it is also considered whether there is adhesion and coating of oxidation catalyst such as Pt, or whether there are spaces 14, irrespective of the embodiments shown in the figures.

### ((Operation, etc.))

A comparable reducing apparatus 12 for carbon particles PM is constructed as described in the above.

Contained in a floating condition in the exhaust gas 1 from the Diesel engine 11, etc are carbon particles PM such as soot and smoke. Accordingly, an exhaust pipe 2, 3 for the exhaust gas 1 is provided therein with a catalytic converter 4 provided with a comparable reducing apparatus 12 for the carbon particles PM.

The comparable reducing apparatus 12 for carbon particles PM adopts a plurality of filters 13 having a fine wire mesh structure in which wires made of metal such as stainless steel are meshed. Each filter 13 captures and accumulates carbon particles PM from within the passing exhaust gas 1, then oxidizes and burns the carbon particles PM, thereby eliminating the carbon particles PM by about 5% to 80%, e.g., about 60% to 80%. In this manner, the carbon particles PM are reduced.

The exhaust temperature of the exhaust gas 1 is normally about 600K and when the Diesel engine 11 is operated at high speed, it becomes about 800K. The carbon particles PM captured and accumulated by each filter 13 naturally catch fire and burn at such an exhaust gas temperature.

Thus, for example, about 60% to 80% of the carbon particles PM in the exhaust gas 1 are eliminated. The remaining 20% to 40% of the carbon particles PM are passed through each filter 13 to obtain a certain degree of particle size and then, are directly discharged to the open air. This level of discharge of the carbon particles PM to the air is now taken as a permissible range.

For example, the carbon particles PM of 200 mg/m³ are reduced and/or eliminated through each filter 13 to 60 mg/m³. In other words, the carbon particles PM are reduced and/or eliminated by about 70% (when sulfur S is 50 ppm).

Thus, in each filter 13 of the reducing apparatus 12, the capture ratio and/or elimination ratio of carbon particles PM have been set, for example, to about 60% to 80% and about 5% to 30% in response to the predictable content of carbon particles PM in the exhaust gas 1.

Setting and/or adjustment to such a capture ratio and/or elimination ratio can be realized, taking the performance of the Diesel engine 11 and the content of the carbon particles PM in the exhaust gas 1 into consideration, by selective combination of (a) adoption of the filters 13 with a wire mesh structure, (b) adhesion and coating of the oxidation catalyst such as Pt to each filter 13, (c) combination of a plurality of filters 13 having different mesh densities, (d) existence or nonexistence of spaces 14 between each filter 13, (e) insertion or non-insertion of an auxiliary section 15 between each space 14, etc.

With reference to the reducing apparatus 12 for carbon particles PM, the following three descriptions are given.

First, under the improved capture ratio and/or elimination ratio of about 5% ~ 80%, e.g., about 5% ~ 30% and about 60% ~ 80% (remarkably reduced compared with the prior art of 95% or more), the carbon particles PM are captured and accumulated in a comparatively small quantity by the plurality of filters 13 shown in the figure and then, immediately oxidized and burnt. Accordingly, it is possible to avoid a sharp temperature rise in each filter 13. The temperature of each filter 13 by oxidization and burning is normally controlled at the 600K level. The maximum temperature is about 900K and does not reach 1,200K.

Thus, the breakage under high temperature heating of each filter 13 can be prevented. Since each filter 13 consists of a trapping wire mesh structure, it is flexible, and even though the carbon particles PM are accumulated, there is a degree of freedom. It is also easy to clean the cinders of the carbon particles PM and possible breakage can also be prevented from this aspect.

Secondly, since breakage of each filter 13 can be prevented as described above, the filter 13 repeats a cycle of the following regenerative use in order: capture and accumulation of new carbon particles PM → oxidization and burning → reduction and elimination → capture and accumulation of new carbon particles PM → oxidization and burning → reduction and elimination. Thus, the filter 13 can repeat the cycle of regenerative use to be continuously used. It is therefore superior in durability. For example, the filter 13 can be continuously used for at least about 250 hours.

Thirdly, it is also possible to avoid a harmful influence due to sulfur (S) contained in both the fuel and exhaust gas 1 of the Diesel engine 11.

As described above, the carbon particles PM in the exhaust gas 1 can be captured and accumulated in a comparatively small quantity at a capture ratio and/or an elimination ratio of about 5% ~ 80%, e.g., about 60°/ ~ 80% and then immediately oxidized and burned, thereby being reduced and/or eliminated. In this manner, it is possible to reduce the occurrence of such a phenomenon whereby the sulfur (S) in the exhaust gas 1 forms sulfate SO₄², adheres to the carbon particles PM to make oxidization and burning difficult, causes clogging or the like.

### ((Others))

First, the above can be further ensured by use in combination with a purifier 5 provided on the upstream side.

Namely, this purifier 5 is provided on the upstream side of the reducing apparatus 12 within the outer cylindrical casing 21 of the catalytic converter 4. The purifier 5 has a honeycomb core 16 provided with cell walls 17 made of metal such as stainless steel to which an oxidation catalyst such as Pt adheres and is coated. The purifier 5 not only allows CO, HC, etc. in the exhaust gas 1 to oxidize and burn to reduce and eliminate them, but also allows NO in the exhaust gas 1 to oxidize to NO₂ to be supplied to the downstream side.

In this manner, oxidization, burning, reduction and elimination of the carbon particles PM are accelerated by NO₂ which has come to be contained in the exhaust gas 1 at the plurality of filters 13 of the reducing apparatus 12 for carbon particles PM on the down stream side.

An accelerating function of oxidization and burning by NO₂ is also ensured from the viewpoint of the temperature because the temperature of each filter 13 is normally controlled at the level of about 600K as described above.

Secondly, the above is further ensured by use in combination with a supply section 19 for a fuel additive 18 shown in Fig. 2.

Namely, the supply section 19 can supply a Diesel engine 11 with cerium and an oxidation catalyst such as Pt as the fuel additive 18. The supply section is arranged in such a manner that supply, necessity of addition, and amount of addition are controlled based on a backpressure value detected by two (2) backpressure sensors SE provided near each filter 13.

Thus, capture and accumulation, oxidization and burning, and reduction and elimination of carbon particles PM are accelerated by the fuel additive 18 contained in the exhaust gas 1 at each filter 13 of the reducing apparatus 12 for carbon particles PM.

Further description will be made hereunder regarding the supply section 19. For example, the supply section 19 for the fuel additive 18 adds the fuel additive 18 in a ratio of 7.5 ml to 50 of fuel in a fuel tank 20. The fuel additive 18 of 7.5 ml contains about 5 ppm of Ce and about 0.5 ppm of Pt therein in the solvent.

Necessity of addition and specific amount of addition or addition ratio of the fuel additive 18 by the supply section 19 are controlled and determined as follows. Namely, the content of carbon particles PM in the exhaust gas 1 and size of capture ratio and/or elimination ratio of the carbon particles PM are detected based on the increase or decrease of a backpressure value detected by two (2) backpressure sensors SE and then controlled and determined in response thereto.

In this manner, when the fuel additive 18 is contained in the exhaust gas 1 from the Diesel engine 11, Ce in the fuel additive 18 accelerates the capture and accumulation of carbon particles PM in the plurality of filters 13 based on a synergistic effect. The oxidation catalyst such as Pt in the fuel additive 18 accelerates the oxidization and burning of carbon particles PM captured and accumulated by each filter 13 based on the synergistic effect.

Thus, the capture ratio and/or the elimination ratio of about 5% ~ 80%, e.g., about 60% ~ 80% of the carbon particles PM in each filter 13, and oxidization and burning at the temperature level of about 600K are surely realized.

Thirdly, one or more backpressure sensors SE are provided near the filters 13. Two (2) backpressure sensors SE are provided in the figure before and after the filters 13.

The supply section 19 for the fuel additive 18 is first controlled based on the backpressure detection value of both backpressure sensors SE as described above. Further, necessity of cleaning each filter 13 is also judged based on the backpressure detection value of both backpressure sensors SE.

Namely, cinders of carbon particles PM gradually adhere to each filter 13, but the timing of cleaning and/or elimination of the cinders is recognized and sensed based on the backpressure detection value. A criterion for timing is, for example, about 25 Kpa.

Fourth, one or more filters 13 are provided to have substantially the same diameter as the inner diameter of an outer cylindrical casing 21 of the catalytic converter 4 as shown in Fig. 1, but various filter shapes can be adopted.

In one embodiment of the present invention, as shown in Fig. 3, a plurality of filters 13 can also be held within the outer cylindrical casing 21 by a holder by providing a space 22 between the filters 13 and the outer cylindrical casing 21. An opening 24 for communication is formed in the central section of each filter 13.

In Fig. 3, four (4) filters 13 are combined in contact which have the same outer diameter, and upper and lower spaces 22 are provided between the outer cylindrical casing 21 and the filters 13. One filter on the most upstream side does not have the communication opening 24 formed and the remaining three (3) filters 13 are respectively provided with an opening 24 for communicating with one another. These communication openings 24 are arranged to communicate with an exhaust pipe 3 on the downstream side. Reference numeral 25 in Fig. 3 is a plate for closing one end of the filter 13 on the upstream side.

In the reducing apparatus 12 for carbon particles PM in Fig. 3, the other construction, function, operation, etc. are based on those of Fig. 1. Accordingly, the same reference numerals as in Fig. 1 are used herein and the description thereof is omitted.

The present invention has the following effects.

### (First Effect)

First, heat breakage etc. can be prevented. Namely, a reducing apparatus for carbon particles according to the present invention is provided, in which a capture radio and/or an elimination ratio of carbon particles are set to about 5% ~ 80%, e.g., about 60% ~ 80%.

The carbon particles are soon oxidized and burned in a small quantity before they are captured and accumulated in a large quantity. Thus, a sharp temperature rise in the filters can be avoided and the temperature is controlled at a comparatively lower level.

Further, this can be ensured by utilizing nitrogen dioxide supplied from the purifier on the upstream side, or by using cerium and an oxidation catalyst such as platinum as a fuel additive.

In the conventional eliminating apparatus for carbon particles made of ceramics, a large amount of carbon particles is captured and accumulated, and then oxidized and burnt at one time. As a result, the capture ratio and/or the elimination ratio become 95% or more and the maximum temperature is about 1,200K. On the contrary, in the reducing apparatus for carbon particles according to the present invention, the temperature is controlled at a lower level and the heat breakage of the filters under high temperature can be prevented.

Since the filters comprise a wire mesh structure, they are flexible and cleaning can be easily done. The reducing apparatus according to the present invention is therefore superior in strength and can not be broken easily compared with the conventional eliminating apparatus made of ceramics.

### ((Second effect))

The reducing apparatus for carbon particles is superior in durability. Namely, the reducing apparatus for carbon particles according to the present invention is not easily broken as described above and heat breakage under high temperature can also be prevented.

The reducing apparatus according to the present invention can repeat, in order, the cycle of capture and accumulation of carbon particles → oxidization and burning → reduction and elimination → regenerative use to be continuously used.

Although the conventional eliminating apparatus breaks in about one week as heat breakage under high temperature occurs, the reducing apparatus according to the present invention is superior in durability and cost because its life expectancy is long.

### ((Third effect))

A harmful influence due to sulfur can also be avoided. Namely, in the reducing apparatus for carbon particles according to the present invention, the carbon particles in the exhaust gas are captured and accumulated in a comparatively small quantity as described above, and then oxidized and burnt quickly, thereby reducing and/or eliminating them.

Since the capture ratio and/or the elimination ratio of the conventional eliminating apparatus are 95% or more, there is every possibility that the sulfur contained in the exhaust gas will form a sulfate and adhere to the carbon particles to make oxidization and burning difficult, causing clogging or the like. However, in the reducing apparatus according to the present invention, it is possible to remarkably reduce such a possibility. Such a harmful influence can be avoided in the reducing apparatus according to the present invention even though sulfur of about 50 ppm through 500 ppm is contained in the exhaust gas.

As described above, in the reducing apparatus according to the present invention, the temperature of one or more filters is controlled at a comparatively lower level. Accordingly, nitrogen dioxide supplied from the purifier on the upstream side can surely exhibit a function of accelerating oxidization and burning carbon particles which is not available in the conventional eliminating apparatus. Thus, in the reducing apparatus according to the present invention, a harmful influence due to sulfur can be avoided.

As described above, all the problems found in the conventional eliminating apparatus can be solved by the present invention and therefore, the effect that the present invention exhibits is remarkably great.

## Claims

1. An apparatus (12) for removing carbon particles from diesel engine exhaust gases (1), the apparatus (12) comprising:
a plurality of metal filters (13) having a wire mesh structure, the filters (13) arranged to capture, in use, carbon particles, wherein the filters (13) regenerate, in use, in order to be continuously used thereafter, and wherein at least some of the filters (13) have the same outer diameter;
a cylindrical casing (21) arranged, in use, to house the filters; **characterised by**:
a space (22) provided between the casing (21) and the filters (13);
a holder (23) positioned in the space (22) between the casing (21) and filters (13) arranged, in use, to hold the filters (13) within the casing (21);
a plate (25) which closes, in use, one end of the filter (13) closest to the upstream side of the apparatus (12);
an opening (24) provided in a central section of at least some of the filters (13) for communication, in use, between filters (13) and communication with an exhaust pipe (3) on the downstream side of the apparatus (12); and
wherein at least some of the filters (13) have different mesh densities.

2. An apparatus (12) according to claim 1, wherein an oxidation catalyst adheres to and is coated on the wires of the filters (13).

3. An apparatus (12) according to any preceding claim, wherein a capture rate and/or an elimination ratio of the carbon particles is set to about 5% to 80%.

4. An apparatus (12) according to claim 3, wherein the capture ratio and/or elimination ratio is set to about 60% to 80%.

5. An apparatus (12) according to any preceding claim, further comprising:
a purifier (5) positioned on the upstream side of the cylindrical casing (21), the purifier comprising at least one metal honeycomb core (16) with an oxidation catalyst adhering to and coated on the cell walls of the at least one honeycomb core;
wherein, in use, the honeycomb cores aids oxidation and burning of carbon compounds in the exhaust gas and cause oxidation of nitric oxide in the exhaust gas.

6. An apparatus (12) according to any preceding claim, further comprising: at least one supply section which supplies, in use, a fuel additive to the engine, wherein fuel additive which, in use, comes to be contained in the exhaust gas accelerates capture of carbon particles in the filters.

7. An apparatus (12) according to claim 6, wherein the fuel additive is an oxidation catalyst.

8. An apparatus (12) according to claim 7, further comprising at least one back pressure sensor positioned near the filters, wherein the back pressure sensor and the at least one supply section are arranged such that, in use, the supply of the fuel additive is controlled based on a back pressure value detected by the at least one back pressure sensor.

9. An apparatus (12) according to claim 5, wherein the honeycomb core is made of stainless steel.

10. An apparatus (12) according to any of claims 2, 5 or 7, wherein the oxidation catalyst is platinum.

## Patentansprüche

1. Vorrichtung (12) zum Entfernen von Kohlenstoffpartikeln aus Dieselmotorabgasen (1), wobei die Vorrichtung (12) umfaßt:
eine Mehrzahl Metallfilter (13) mit einer Drahtgeflechtstruktur, wobei die Filter (13) angeordnet sind, um bei Benutzung Kohlenstoffpartikel einzufangen, wobei sich die Filter (13) im Betrieb regenerieren, um danach kontinuierlich benutzt zu werden, und wobei wenigstens einige der Filter (13) den gleichen äußeren Durchmesser aufweisen;
ein zylindrisches Gehäuse (21) zum Aufnehmen der Filter im Betrieb; **gekennzeichnet durch**:
einen Zwischenraum (22), der zwischen dem Gehäuse (21) und den Filtern (13) vorgesehen ist;
einen im Zwischenraum (22) zwischen dem Gehäuse (21) und den Filtern (13) positionierten Halter (23), der angeordnet ist, um im Betrieb die Filter (13) im Gehäuse (21) zu halten;
eine Platte (25), die im Betrieb ein Ende des Filters (13) schließt, das der stromaufwärtigen Seite der Vorrichtung (12) am nächsten ist;
eine Öffnung (24), die in einem zentralen Abschnitt mindestens einiger der Filter (13) im Betrieb zur Verbindung zwischen Filtern (13) und zur Verbindung mit einem Abgasrohr (3) an der stromabwärtigen Seite der Vorrichtung (12) vorgesehen ist; und
wobei mindestens einige der Filter (13) unterschiedliche Maschendichten aufweisen.

2. Vorrichtung (12) nach Anspruch 1, wobei ein Oxidationskatalysator an den Drähten der Filter (13) haftet und auf sie aufgetragen ist.

3. Vorrichtung (12) nach einem der vorhergehenden Ansprüche, wobei die Auffangrate und/oder das Eliminierungsverhältnis der Kohlenstoffpartikel auf etwa 5% bis 80% eingestellt ist.

4. Vorrichtung (12) nach Anspruch 3, wobei die Auffangrate und/oder das Eliminierungsverhältnis der Kohlenstoffpartikel auf etwa 60% bis 80% eingestellt ist.

5. Vorrichtung (12) nach einem der vorhergehenden Ansprüche, weiterhin umfassend:
eine Reinigungseinrichtung (5), die auf der stromaufwärtigen Seite des zylindrischen Gehäuses (21) positioniert ist, wobei die Reinigungseinrichtung mindestens einen Metallwabenkern (16) mit einem Oxidationskatalysator umfaßt, der an den Zellwänden des mindestens einen Wabenkerns haftet und auf diese aufgetragen ist;
wobei die Wabenkerne im Betrieb die Oxidation und Verbrennung der Kohlenstoffverbindungen im Abgas unterstützen und die Oxidation von Stickoxid im Abgas bewirken.

6. Vorrichtung (12) nach einem der vorhergehenden Ansprüche, weiterhin umfassend:
mindestens einen Zuführabschnitt, der dem Motor im Betreib einen Brennstoffzusatz zuführt, wobei der Brennstoffzusatz, der im Betrieb schließlich im Abgas enthalten ist, das Auffangen von Kohlenstoffpartikeln in den Filtern beschleunigt.

7. Vorrichtung (12) nach Anspruch 6, wobei der Brennstoffzusatz ein Oxidationskatalysator ist.

8. Vorrichtung (12) nach Anspruch 7, weiterhin umfassend mindestens einen Gegendrucksensor, der nahe den Filtern positioniert ist, wobei der Gegendrucksensor und der mindestens eine Zuführabschnitt solchermaßen angeordnet sind, daß die Zufuhr des Brennstoffzusatzes im Betrieb auf der Basis eines Gegendruckwerts gesteuert wird, der durch den mindestens einen Gegendrucksensor ermittelt wird.

9. Vorrichtung (12) nach Anspruch 5, wobei der Wabenkem aus rostfreiem Stahl hergestellt ist.

10. Vorrichtung (12) nach einem der Ansprüche 2, 5 oder 7, wobei der Oxidationskatalysator Platin ist.

## Revendications

1. Appareil (12) pour retirer les particules carbonées des gaz d'échappement (1) d'un moteur diesel, l'appareil (12) comprenant :
une pluralité de filtres métalliques (13) présentant une structure en tamis, les filtres (13) étant agencés pour capturer, lors de l'utilisation, des particules carbonées, dans lequel les filtres (13) se régénèrent, lors de l'utilisation, afin d'être utilisés en continu par la suite, et dans lequel au moins certains des filtres (13) présentant le même diamètre extérieur ;
un boîtier cylindrique (21) agencé, lors de l'utilisation, pour héberger les filtres ; **caractérisé par** :
un espace (22) prévu entre le boîtier (21) et les filtres (13) ;
un support (23) positionné dans l'espace (22) entre le boîtier (21) et les filtres (13), agencé, lors de l'utilisation, pour maintenir les filtres (13) à l'intérieur du boîtier (21) ;
une plaque (25) qui ferme, lors de l'utilisation, une extrémité du filtre (13) le plus près possible de la partie située en amont de l'appareil (12) ;
une ouverture .(24) prévue dans la section centrale d'au moins certains des filtres (13) pour la communication, lors de l'utilisation, entre les filtres (13) et la communication avec la conduite d'échappement (3) située en aval de l'appareil (12) ; et
dans lequel au moins certains des filtres (13) présentent des densités de maille différentes.

2. Appareil (12) selon la revendication 1, dans lequel un catalyseur d'oxydation adhère aux fils des filtres (13) et est appliqué sur ceux-ci.

3. Appareil (12) selon l'une quelconque des revendications précédentes, dans lequel le rapport de capture et/ou le rapport d'élimination des particules carbonées sont réglés entre environ 5 % et 80 %.

4. Appareil (12) selon la revendication 3, dans lequel le rapport de capture et/ou le rapport d'élimination sont réglés entre environ 60 % et 80 %.

5. Appareil (12) selon l'une quelconque des revendications précédentes, comprenant en outre :
un épurateur (5) positionné en amont du boîtier cylindrique (21), l'épurateur comprenant au moins une âme alvéolaire (16) en métal avec un catalyseur d'oxydation adhérant aux parois cellulaires de l'au moins une âme alvéolaire et appliqué sur celles-ci ;
dans lequel, lors de l'utilisation, les âmes alvéolaires facilitent l'oxydation et le brûlage des composés carbonés dans le gaz d'échappement et provoquent l'oxydation de l'oxyde nitrique dans le gaz d'échappement.

6. Appareil (12) selon l'une quelconque des revendications précédentes, comprenant en outre : au moins une section d'alimentation qui alimente, lors de l'utilisation, le moteur en additif pour carburant, dans lequel l'additif pour carburant qui, lors de l'utilisation, est contenu dans les gaz d'échappement accélère la capture des particules carbonées dans les filtres.

7. Appareil (12) selon la revendication 6, dans lequel l'additif pour carburant est un catalyseur d'oxydation.

8. Appareil (12) selon la revendication 7, comprenant en outre au moins un capteur de contre-pression positionné à proximité des filtres, dans lequel le capteur de contre-pression et l'au moins une section d'alimentation sont agencés de telle sorte que, lors de l'utilisation, l'alimentation en additif pour carburant est contrôlée sur la base d'une valeur de contre-pression détectée par l'au moins un capteur de contre-pression.

9. Appareil (12) selon la revendication 5, dans lequel l'âme alvéolaire est réalisée en acier inoxydable.

10. Appareil (12) selon l'une quelconque des revendications 2, 5 ou 7, dans lequel le catalyseur d'oxydation est le platine.
